**Europäisches Patentamt**

(19) **European Patent Office** (11) Numéro de publication: **0 176 417**

**Office européen des brevets** **B1**

(12) **FASCICULE DE BREVET EUROPÉEN**

(45) Date de publication du fascicule du brevet: 08.03.89 (51) Int. Cl.⁴: **F 16 F 9/02**

(21) Numéro de dépôt: **85401737.3**

(22) Date de dépôt: **06.09.85**

(54) **Ressort pneumatique à détection de position.**

(30) Priorité: **28.09.84 FR 8414923** (73) Titulaire: **AIRAX, Z.I. Chemaudin- Franois, F-25320 Montferrand- Le- Chateau (FR)**

(43) Date de publication de la demande: **02.04.86 Bulletin 86/14** (72) Inventeur: **Jaillet, André, Auxon Dessus, F-25870 Geneuille (FR)**

(45) Mention de la délivrance du brevet: **08.03.89 Bulletin 89/10** (74) Mandataire: **de Boisse, Louis Arnaud, CABINET de BOISSE 37, Avenue Franklin D. Roosevelt, F-75008 Paris (FR)**

(84) Etats contractants désignés: **AT BE CH DE FR GB IT LI LU NL SE**

(56) Documents cité:
**FR-A-2 378 987**
**FR-A-2 407 576**
**FR-A-2 410 349**
**FR-A-2 500 964**
**US-A-4 163 970**

LIBER, STOCKHOLM 1989

## Description

Le brevet français 75 38295 déposé le 15 Décembre 1975 et publié sous le N° 2 335 929 décrit l'aménagement d'un ressort pneumatique - appelé aussi ressort à gaz - en vue de l'émission d'un signal électrique dès lors qu'est atteint un état géométrique déterminé de l'appareil, en l'occurence sa position extrême de "tige rentrée", ce signal pouvant enclencher ou déclencher un dispositif électrique annexe, par exemple de signalisation ou d'avertissement. De ce fait, un changement d'état dû à un écart de position relative de la tige par rapport à cet état déterminé, permet de détecter tout mouvement intempestif d'une pièce de structure associée au ressort pneumatique, telle que le hayon ou le capot d'une voiture, la trappe ou autre battant d'accès à un local.

Bien entendu, cet état détectable de la géométrie du ressort pneumatique n'est pas obligatoirement ponctuel mais peut s'étendre sur une certaine longueur de sa course comme cela découle d'ailleurs du brevet français 81 03969 déposé le 27 Février 1981 et publié sous le N° 2 500 964, lequel préconise l'emploi de lamelles élastiques qui sont tantôt en contact avec la paroi conductrice du tube du ressort pneumatique et tantôt à l'écart de celle-ci.

La présente invention a pour objet un ressort pneumatique de ce type et se propose d'y apporter des perfectionnements en matière de détection de position.

Conformément à la présente invention, les lamelles élastiques de contact sont commandées par une came isolante qui est relativement mobile par rapport à elles et qui est conçue pour venir soit les appliquer contre la paroi du tube si au repos elles en sont à l'écart, soit à l'inverse les en écarter si au repos elles sont en contact avec la paroi du tube. Dans le premier cas, l'organe formant came agit en écarteur eu égard aux lamelles tandis que, dans le second cas, il agit en constricteur vis-à-vis de celles-ci.

Selon une particularité technique de la présente invention, des agencements mécaniques sont prévus pour régler la position longitudinale des lamelles élastiques le long de l'axe du tube, permettant ainsi de choisir à volonté le point de la course du ressort pneumatique où doit intervenir la fermeture ou l'ouverture du circuit électrique. Les lamelles élastiques sont à cet effet montées sur un support mobile équipé d'un taquet de blocage ou autre organe de calage fixant sa position.

La présente invention peut recevoir diverses applications et l'on citera à titre indicatif système avertisseur anti-vol en cas d'ouverture non autorisée d'une pièce de fermeture, éclairage d'une enceinte telle qu'un coffre de voiture, coupure de dégivrage de lunette arrière sur hayon relevé.

La description qui va suivre en regard des dessins annexés, donnée à titre d'exemple non limitatif, fera bien comprendre comment l'invention peut être réalisée.

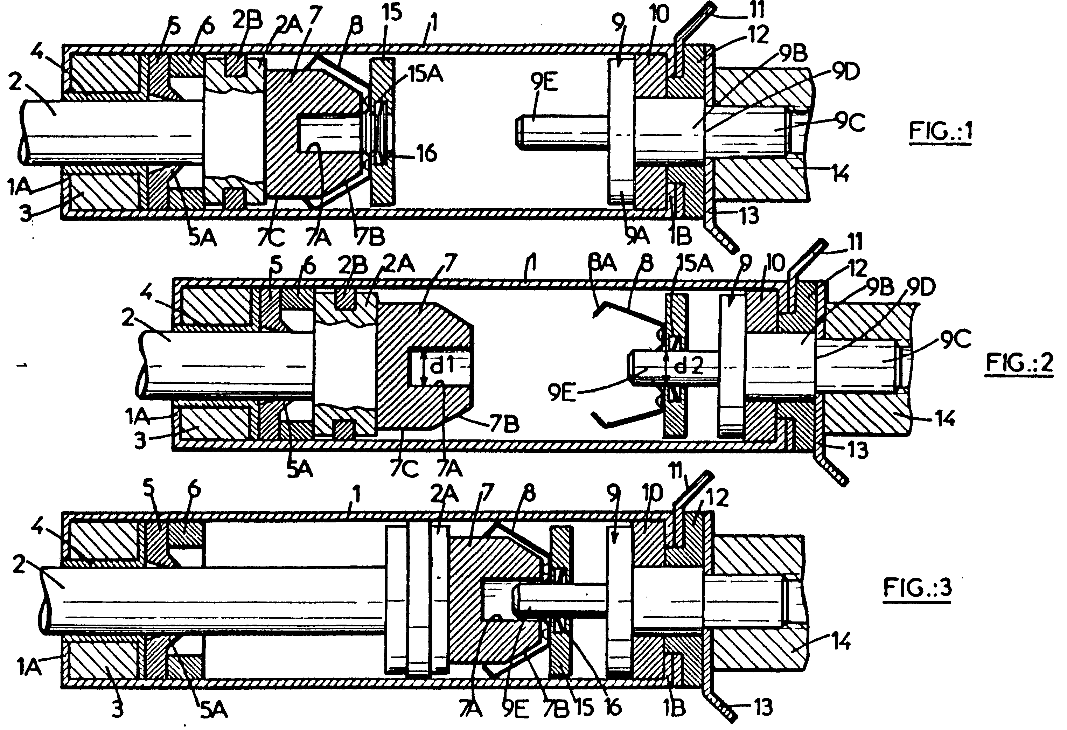

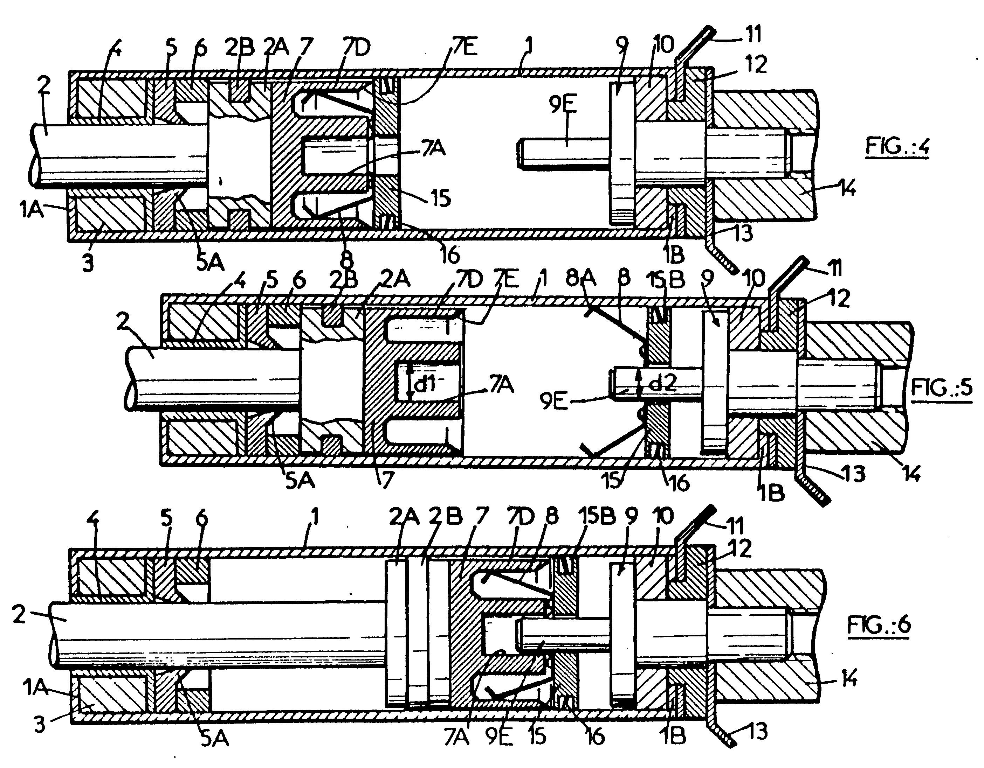

Les figures 1, 2 et 3 sont des vues en coupe axiale d'un mode de réalisation de l'invention, le représentant respectivement en son état d'origine à la livraison (figure 1) en position d'extension ou "tige sortie" (figure 2) et en position de rétraction ou "tige rentrée" (figure 3). Les figures 4, 5 et 6 sont des vues analogues d'une variante de réalisation de l'invention, dans les trois situations respectives sus-mentionnées.

Le premier mode de réalisation illustré par les figures 1, 2 et 3 comporte un tube hermétique en matériau conducteur 1 rempli de gaz sous pression approprié à son fonctionnement en ressort pneumatique. Il est fermé à une extrémité par un fond 1A que traverse de façon étanche la tige 2 d'un piston 2A à segment 2B, au moyen d'un guide-tige 3 avec interposition d'un manchon isolant 4 et adjonction d'un joint annulaire 5 à lèvre circulaire 5A raclant le pourtour de la tige 2, ce joint 5 étant pris en sandwich entre le guide-tige 3 et une bague de serrage 6 formant butée limitatrice de la course d'extension de la tige de piston 2 hors du tube 1 (la position extrême "tige sortie" est représentée sur les figures 1 et 2).

A l'opposé de sa tige 2 et donc vers l'intérieur du tube 1, le piston 2A est, selon l'invention, solidaire d'une cane en matière isolante 7 présentant d'une part sur l'axe un alésage borgne 7A de diamètre d1 et d'autre part sur sa surface latérale un bord d'attaque en forme de rampe 7B suivi d'une portée cylindrique 7C coaxiale à la paroi du tube 1 mais ménageant avec celle-ci un certain jeu annulaire. Dans ce jeu se trouvent (figure 1) les extrémités libres rabattues 8A de lamelles élastiques de contact 8 fixé es sur un support annulaire 15 dans un évidement central 15A duquel est logé un taquet ou bague de blocage 16 dont le rôle apparaîtra plus loin.

Du côté opposé du tube 1 est monté de façon électriquement isolée un embout métallique monobloc de révolution 9 se composant d'un disque 9A dont la périphérie est en retrait par rapport à la paroi du tube 1 et dont la face externe est solidaire d'un corps cylindrique 9B se prolongeant vers l'extérieur du tube 1 par une queue filetée 9C ménageant un épaulement 9D avec le corps 9B. Ce dernier traverse, outre un joint annulaire d'étanchéité 10 s'appuyant latéralement contre la face externe du disque 9A et périphériquement contre la paroi du tube 1, un bouchon isolant 12 qui obture le fond percé 1B du tube 1 et qui sépare électriquement une première borne de connexion 11 en contact avec le fond de tube 1B d'une seconde borne de connexion 13 enserrée contre l'épaulement 9D par un écrou 14 se vissant sur la queue filetée 9C de l'embout 9 et fixant les diverses pièces 9, 10, 11, 12, 13 sur le fond 1B du tube 1.

Du côté interne, à l'opposé de sa queue filetée 9C, l'embout métallique monobloc 9 présente une tête cylindrique 9E située dans l'axe de l'alésage 7A de la came isolante 7 et de diamètre d2 plus petit que le diamètre di de celui-ci.

Ainsi, lorsqu'à partir de l'état d'origine représenté sur la figure 1, le ressort pneumatique effectue sa première manoeuvre d'enfoncement de la tige de piston 2 dans le tube 1, (de gauche à droite sur le dessin), le support annulaire 15 des lamelles élastiques 8 est transporté vers la droite par la came isolante 7 avec laquelle il se déplace et vient s'engager autour de la tête cylindrique 9E de l'embout 9, celle-ci pouvant pénétrer librement dans l'alésage borgne 7A de la came 7 (puisque son diamètre d2 est plus petit que d1) jusqu'à butée éventuelle de son extrémité libre contre le fond de l'alésage borne 7A. Au terme de sa course de rétraction (voir figure 3), la tige de piston 2 repart vers la gauche du dessin, abandonnant le support annulaire 15 dans la position qu'il avait atteinte sur la tête cylindrique 9E (voir figure 2), le taquet de blocage 16 étant conçu pour permettre au support 15 de se déplacer de gauche à droite le long de la tête 9E, mais pour lui interdire par coincement sur celle-ci tout mouvement en sens inverse, c'est-à-dire de droite à gauche.

Pour des raisons de simplicité, on n'a pas représenté sur les dessins l'entourage mécanique et électrique du ressort pneumatique qui est classique. L'appareil est censé être monté comme à l'accoutumée:

- la tige de piston 2 par son bout externe (plus loin à gauche) et l'écrou de serrage par son extrémité externe (plus loin à droite) sont respectivement attelés aux pièces de structure relativement mobiles que le ressort pneumatique doit solliciter à l'ouverture, par exemple le hayon ou le capot d'une voiture et sa carrosserie, le battant d'une porte et son dormant,

- le circuit électrique que doit commander le ressort pneumatique opérant en interrupteur est connecté à ses bornes 11 et 13, comme représenté schématiquement dans les brevets français sus-mentionnés.

L'appareil qui vient d'être décrit fonctionne de la façon suivante:

Dans son état "tige sortie" comme illustré par la figure 2, les lamelles élastiques 8 se trouvent en position de repos, à l'écart de la paroi du tube 1 et donc hors de contact avec elle. Le circuit électrique extérieur branché aux bornes 11 et 13 est donc coupé.

En un certain point de la course de rétraction de la tige de piston 2 dans le tube 1 - lequel point est déterminé par l'emplacement du support annulaire 15 - la came isolante 7 solidaire du piston 2A arrive au droit des extrémités libres rabattues 8A des lamelles élastiques 8 et, par l'action sur celles-ci de son bord d'attaque formant rampe 7B, il écarte les lames et les applique contre la paroi du tube 1, établissant ainsi un contact franc avec lui. Le circuit électrique extérieur branché aux bornes 11 et 13 est donc fermé. Cette situation se maintient jusqu'au terme de la course de rétraction (voir figure 3).

Si, pour une raison ou pour une autre, la course de rétraction de la tige de piston 2 se poursuivait plus loin, le support 15 des lamelles 8 se décalerait d'autant vers la droite et y demeurerait par suite du blocage exercé par le taquet 16 sur la tête 9E.

Il n'est pas indispensable que celui-ci ait, comme représenté, une disposition centrale sur le support 15 et vienne en prise avec la surface de la tête d'embout 9E. Il pourrait tout aussi bien avoir une disposition périphérique et venir en prise avec la paroi du tube 1, comme dans la variante de réalisation des figures 4, 5 et 6. On y retrouve en effet un taquet annulaire 16 mais de plus grand diamètre et logé ici dans un évidement 15B pratiqué à la périphérie du support 15 des lamelles élastiques 8.

On notera par ailleurs que, dans cette variante de réalisation, ces lamelles sont au repos en contact avec la paroi du tube 1 (voir figure 5), le circuit électrique extérieur branché aux bornes 11 et 13 étant alors fermé. Pour l'ouvrir, il faudra faire fléchir les lamelles 8 vers l'axe afin de les écarter de la paroi du tube 1.

La came isolante 7 est à cet effet conformée en constricteur grâce à une douille 7D à bord d'attaque effilé formant coin 7E qui vient s'insérer entre la paroi du tube 1 et les extrémités libres 8A des lamelles élastiques 8 (voir figure 6).

Mises à part ces particularités techniques visant la disposition périphérique du taquet annulaire 16 sur le support 15 et la configuration de la came isolante 7 en constricteur pour des lamelles élastiques 8 qui sont au repos en contact avec le tube 1, la variante des figures 4, 5 et 6 fonctionne exactement de la façon décrite en regard des figures 1, 2 et 3, et il paraît donc inutile d'en réitérer les explications, d'autant que les mêmes chiffres de référence sont utilisés pour désigner les mêmes organes.

**Revendications**

1. Ressort pneumatique agencé en vue de la mise en oeuvre d'une installation électrique annexe dès lors qu'il se trouve dans un état géométrique donné correspondant à une position relative déterminée de sa tige de piston, l'appareil étant équipé à cet effet de lamelles élastiques (8) aménagées pour être tantôt en contact avec la paroi conductrice de son tube (1) et tantôt à l'écart de celle-ci, caractérisé en ce que les lamelles élastiques de contact (8) sont commandées par une came isolante (7) qui est relativement mobile par rapport à elles et qui est conçue pour venir soit les apliquer contre la paroi du tube (1) si au repos elles en sont à l'écart, soit à l'inverse les écarter si au repos elles sont en contact avec la paroi du tube (1).

2. Ressort pneumatique selon la revendication 1, caractérisé en ce que des agencements mécaniques (15 - 16) sont prévus pour régler la position longitudinale des lamelles élastiques (8) le long de l'axe du tube (1), permettant ainsi de choisir à volonté le point de la course du ressort pneumatique où doit intervenir la fermeture ou l'ouverture du circuit électrique.

3. Ressort pneumatique selon la revendication 2, caractérisé en ce que les lamelles élastiques (8) sont montées sur un support mobile (15) équipé d'un taquet de blocage (16) ou autre organe decalage fixant sa position.

4. Ressort pneumatique selon la revendication 3, caractérisé en ce que le taquet de blocage (16) est logé dans un évidement central (15A) ménagé dans le support (15), lequel est annulaire pour être enfilé par une tête cylindrique (9E) d'un embout fixe (9), le taquet (16) étant conçu pour permettre le déplacement du support (15) le long de cette tête (9E) dans un sens mais pour interdire tout déplacement relatif en sens inverse.

5. Ressort pneumatique selon la revendication 3, caractérisé en ce que le taquet de blocage (16) est logé dans un évidement périphérique (15B) ménagé dans le support (15) et il est conçu pour permettre le déplacement de ce dernier le long du tube (1) dans un sens mais pour interdire tout déplacement relatif en sens inverse, en venant en prise avec la paroi du tube (1).

## Patentansprüche

1. Pneumatische Feder für die Betätigung einer zugeordneten elektrischen Einrichtung dann, wenn diese sich in einem vorgegebenen geometrischen Zustand befindet, der durch eine relative Stellung der Kolbenstange bestimmt ist, wobei das Gerät zu diesem Zweck mit elastischen Lamellen (8) versehen ist, die mal in Kontakt mit der elektrisch leitenden Wand des Rohres (1) und mal mit Abstand zu dieser angeordnet sind, dadurch gekennzeichnet, daß die elastischen Lamellen (8) für den Kontakt durch einen isolierenden Nocken (7) betätigt sind, der relativ zu diesen verschiebbar und so gestaltet ist, damit diese gegen die Wand des Rohres (1) angelegt werden, wenn sie in der Ruhestellung mit Abstand zu dieser angeordnet ist oder umgekehrt diese hiervon in Abstand zu bringen, wenn diese im Ruhezustand in Kontakt mit der Wand des Rohres (1) sind.

2. Pneumatische Feder nach Anspruch 1, dadurch gekennzeichnet, daß die mechanischen Einrichtungen (15, 16) für die Einstellung der longitudinalen Positionen der elastischen Lamellen (8) längs der Achse des Rohres (1) dienen, so daß der Punkt auf dem Weg der Pneumatischen Feder frei gewählt werden kann, an dem das Schließen oder öffnen des elektrischen Kreises eintreten soll.

3. Pneumatische Feder nach Anspruch 2, dadurch gekennzeichnet, daß die elastischen Lamellen (8) auf einem verschiebbaren Träger (15) befestigt sind, der mit einer Blockiernase (16) oder einem anderen Verkeilorgan versehen ist, welches seine Position fixiert.

4. Pneumatische Feder nach Anspruch 3, dadurch gekennzeichnet, daß die Blockiernase (16) in einer zentralen Ausnehmung (15A) in dem beweglichen Träger (15) angeordnet ist, wobei diese ringförmig ist, damit diese auf einen zylindrischen Zapfen (9E) eines festen Ansatzes (9) auffädelbar ist und daß die Blockiernase (16) so gestaltet ist, daß diese eine Verschiebung des Trägers (15) längs des Zapfens (9E) in einer Richtung gestattet, jedoch jede Verschiebung in umgekehrter Richtung verhindert.

5. Pneumatische Feder nach Anspruch 3, dadurch gekennzeichnet, daß die Blockiernase (16) in einer Umfangsausnehmung (15B) des Trägers (15) angeordnet ist und daß diese derart gestaltet ist, daß eine Verschiebung des letzteren längs des Rohres (1) in einer Richtung möglich ist, daß aber jede relative Verschiebung in entgegengesetzter Richtung unterbleibt, wenn diese in Kontakt mit der Wand des Rohres (1) kommt.

## Claims

1. A pneumatic spring arranged with a view to putting an annex electrical equipment into operation as it is a given geometrical condition corresponding to a determined relative position of its piston rod, the device being equipped for this purpose with elastic strips (8) which are arranged so as to be in contact at one time with the conducting wall of its tube (1), and to be separated from the latter at another time, characterized in that the elastic contact strips (8) are controlled by an insulating cam (7) which is movable relative to them, and which is designed either to apply them against the wall of the tube (1) if they are separated from it when at rest, or the reverse, that is to say to separate them from the wall of the tube (1) if they are in contact with it when at rest.

2. A pneumatic spring according to claim 1, wherein mechanical means (15, 16) are provided for adjusting the longitudinal position of the elastic strips (8) along the axis of the tube (1), whereby enabling the point of the stroke of said piston when closure or opening of the electrical circuit should take place to be chosen at will.

3. A pneumatic spring according to claim 2, wherein the elastic strips (8) are mounted on a movable support (15) which is provided with a stopblock (16) or other locking component fixing it position.

4. A pneumatic spring according to claim 3, wherein the stopblock (16) is housed in a central recess (15A) arranged in the support (15), which is annular so as to be entered by a cylindrical head (9E) of a fixed pin (9), said stop-block (16) being designed to allow movement of the support (15) along said head (9E) in one direction but to prevent any relative movement in the opposite direction.

5. A pneumatic spring according to claim 3, wherein said stop-block (16) is housed in a peripheral recess (15B) arranged in the support (15) and is designed to allow movement of the latter along the tube (1) in one direction but to prevent any relative movement in the opposite direction, by gripping the wall of the tube (1).

FIG.:1

FIG.:2

FIG.:3

EP 0 176 417 B1

EP 0 176 417 B1

FIG.:4

FIG.:5

FIG.:6

3